(19) Europäisches Patentamt

European Patent Office

Office européen des brevets

(11) Publication number: **0 261 452 B1**

(12) EUROPEAN PATENT SPECIFICATION

(45) Date of publication of patent specification: **17.02.93**  (51) Int. Cl.5: **G01N 21/27**, G01N 21/35

(21) Application number: **87112686.8**

(22) Date of filing: **31.08.87**

(54) Gas analyzer.

(30) Priority: **20.09.86 JP 222326/86**

(43) Date of publication of application:
**30.03.88 Bulletin 88/13**

(45) Publication of the grant of the patent:
**17.02.93 Bulletin 93/07**

(84) Designated Contracting States:
**AT CH DE GB IT LI**

(56) References cited:
**GB-A- 2 035 552**
**US-A- 3 932 040**
**US-A- 4 067 320**
**US-A- 4 256 964**

**PATENT ABSTRACTS OF JAPAN, vol. 11, no. 91 (P-558)[2538], 23rd March 1987;& JP-A-61 243 343**

(73) Proprietor: **HORIBA, LTD.**
**2 Miyanohigashi-machi Kissyoin**
**Minami-ku Kyoto(JP)**

(72) Inventor: **Asano, Ichiro**
**330-470, Bodaiji Kousei-cho**
**Kouka-gun Shiga Prefecture(JP)**
Inventor: **Yoneda, Aritoshi**
**1-24, Hiroshiki Ohyamazaki-cho**
**Otokuni-gun Kyoto(JP)**
Inventor: **Imaki, Takao**
**9-4, 1-chome Baba**
**Nagaokakyo-city Kyoto(JP)**

(74) Representative: **TER MEER - MÜLLER - STEIN-MEISTER & PARTNER**
**Mauerkircherstrasse 45**
**W-8000 München 80 (DE)**

EP 0 261 452 B1

**Description**

The present invention relates to a gas analyzer used for determining the concentration of components to be determined (such as NO and CO) contained in a sample gas.

Fig. 7 illustrates a prior art gas analyzer as it is disclosed in US-A-4,256,964 (already there as prior art). It comprises:

- a light source means 1;
- a gas-passing through cell means 2 irradiated by the light source means;
- a light quantity detector means 3 for detecting the quantity of light passing through said gas-passing through cell means, and outputting detector signals;
- a gas distributor means 4 for alternatingly introducing a sample gas and a reference gas into said gas-passing through cell means; and
- a signal processing circuit X receiving said detector signals and outputting a measurement signal indicating the amount of a gas component to be detected within said sample gas, said circuit comprising an alternating current detecting means 6 for outputting only the alternating current signal component of said detector signals, and a rectifier means 7 for receiving the output signal of said alternating current detecting means.

In gas analyzers, e. g. gas analyzers of the above described type, the problem exists that a span-drift may occur on account of a change of the light-quantity resulting from changes of the voltage applied to the light source or of ambient temperature, a deterioration of the light source itself and the like, stains of a transmission window of a gas-passing through cell, a change of sensitivity of the detector means itself, and the like.

To compensate for such drifts, US-A-3,932,040 and US-A-4,067,320 describe counter measures.

In the gas analyzer according to US-A-3,932,040 the reference gas is introduced into the cell only at time intervalls of e. g. 30 minutes for a period of 1 to 2 minutes. The detector voltage is measured and a highly constant counter voltage is automatically selected to equalize the difference against the detector voltage to zero. After equalization, the reference substance is again replaced by the sample gas. The voltage difference then measured is a measure of the concentration of the gas components to be determined. In this gas analyzer, the constant counter voltage acts as a kind of storage means for storing the result of the reference measurement.

The gas analyzer as disclosed in US-A-4,067,320 serves for measuring the $CO_2$ content of exhaled air. The exhaled and the inhaled air pass alternatingly through the detector cell. The inhaled air is used as a reference gas as it contains almost no $CO_2$ in relation to the exhaled air. As is obvious from the use of this gas analyzer, the output voltage of the detector has the character of a DC voltage alternating between a higher level, when the inhaled air is measured, and a lower level, when the exhaled air is measured. However, to achieve rather exact results, the light source is chopped by a radiation interrupter with e. g. 200 Hz. Therefore, the detector output voltage can be AC amplified with high accuracy. The signals are rectified to achieve a mean value, and the mean value, as measured in the time period during which inhaled air passes through the detector cell, is stored. The rectified value as measured in the following period, in which exhaled air is passing through the cell, is divided by the stored value, thereby compensating for almost all drift effects.

As can be seen from the functions of the analyzers of US-A-3,932,040 and of US-A-4,067,320, these analyzers measure a reference value during a fixed time period, in which reference gas is filled into the cell. The DC sample signal is then divided by said reference value (according to US-A-4,067,320) or a bias voltage is adjusted in a way that the measured reference value is in agreement with a predetermined value (according to US-A-3,932,040).

Also in case of the prior art analyzer as explained in relation with Fig. 7, it is in principle possible to measure such a reference value during time periods, in which reference gas is flowing through the cell, and to use such a reference value either for dividing a measurement value or for adjusting the gain when amplifying the measured signal. However, it is rather difficult to realize this principle by measuring the reference value during such fixed time periods in the prior art method according to Fig. 7, as there the alternating period concerning the flow of sample gas and reference gas, respectively, is rather short, and as the time delay between time instants of changing the position of a valve for alternatingly introducing the gases into the cell, and the time instant, when the reference gas is measured in the cell depends on the extent of flow through the cell.

It is therefore the object of the present invention to provide a gas analyzer of the type as described in the beginning of this description, which analyzer has a simply arranged signal processing circuit for normalizing the measurement signal.

The gas analyzer of the present invention comprises the features as listed in the beginning of this description, and it is characterized in that said signal processing circuit further comprises a peak detecting means for outputting a peak value signal representing essentially the peak value of said detector signals. Additionally, the gas analyzer of the present invention comprises either a dividing means or an autogain controller. The dividing means serves for dividing the rectified signals through said peak value signal. The autogain controller serves for adjusting the gain, when amplifying the detector signals, in a way to keep said peak value signal constant.

The gas analyzer of the present invention does not measure the reference value, as it is used for normalizing the measurement signal, during fixed time periods, as this is done in the prior art, but it comprises a peak detecting means comprising either a peak hold circuit or a low pass filter. Due to this peak detecting means, it is not necessary, when measuring the reference value, to determine as accurately as possible flow velocity dependent time periods during which reference gas is measured by the detector means.

Various kinds of preferred embodiments of a gas analyzer according to the present invention will be described in the following with reference to the accompanying drawings of Figs. 1 to 6 in which:

Fig. 1 is a general rough block diagram showing a first preferred embodiment comprising a single cell and a division circuit as dividing means;

Fig. 2(A) to (G) are signal diagrams for explaining the operation of the embodiment of Fig. 1;

Fig. 3 is a signal diagram illustrating the operation of one modification of the first preferred embodiment, using a low pass filter instead of a peak hold circuit;

Fig. 4 is a rough block circuit diagram showing principle parts of a second preferred embodiment having an auto-gain controller as dividing means instead of a division circuit as in Fig. 1;

Fig. 5 is a general rough block circuit diagram showing a third preferred embodiment, similar to the first embodiment, however having a pair of cells; and

Fig. 6(A) to (I) are signal diagrams for explaining the operation of the embodiment of Fig. 5.

In addition, Fig. 7 is an already discussed general rough block circuit diagram showing a prior art gas analyzer.

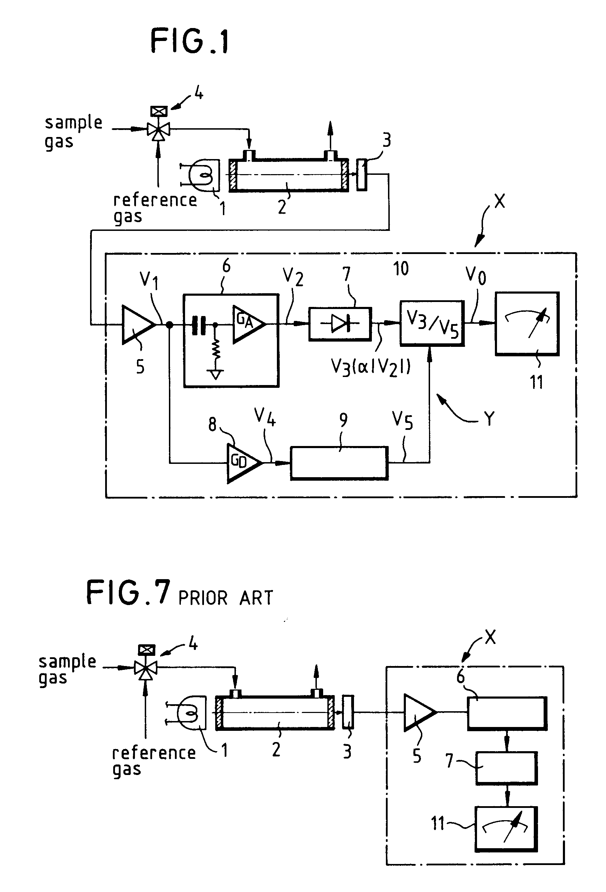

Figs, 1, 2 show the first preferred embodiment wherein a detector portion comprising elements designated by reference numerals 1, 2, 3, 4 in Fig. 1 is of conventional construction as shown in said Fig. 7 so that their description is omitted here.

The construction of a signal treatment circuit X for treating an output signal from the light-quantity detector 3 is described in detail. Said signal treatment circuit X comprises a preamplifier 5 for amplifying a detected signal from said light-quantity detector 3, an alternating current amplifier circuit 6 for taking out an alternating current component $V_2$ corresponding to a difference between an optical energy after passing through a reference gas (zero gas) and that after passing through a sample gas from an output signal $V_1$ from said preamplifier 5, a rectifying circuit 7 for taking out a signal $V_3$ corresponding (proportional) to a change $|V_2|$ of said alternating current component $V_2$, a direct current amplifier circuit 8 for direct-current amplifying the output signal $V_1$ from said preamplifier 5 to take out a direct current component $V_5$ having nothing to do with the concentration of said sample gas in addition to said alternating current component $V_2$ and a peak hold circuit 9 for putting out the signal $V_5$ (the direct current component having nothing to do with the concentration of said sample gas) corresponding to a maximum value of an output signal $V_4$ from said direct current amplifier circuit 8 arranged in parallel to said alternating current amplifier circuit 6 and said rectifying circuit 7, and a division circuit 10 for dividing the signal $V_3$ corresponding (proportional) to the change $|V_2|$ of the alternating current component $V_2$ put out from said rectifying circuit 7 by the output signal $V_5$ (the direct current component having nothing to do with the concentration of said sample gas) from said peak hold circuit 9 so as to put out an output signal $V_0$ from said division circuit 10 to an indicator 11. Here, the direct current amplifier circuit 8, the peak hold circuit 9 and the division circuit 10 are collectively called a compensating means Y.

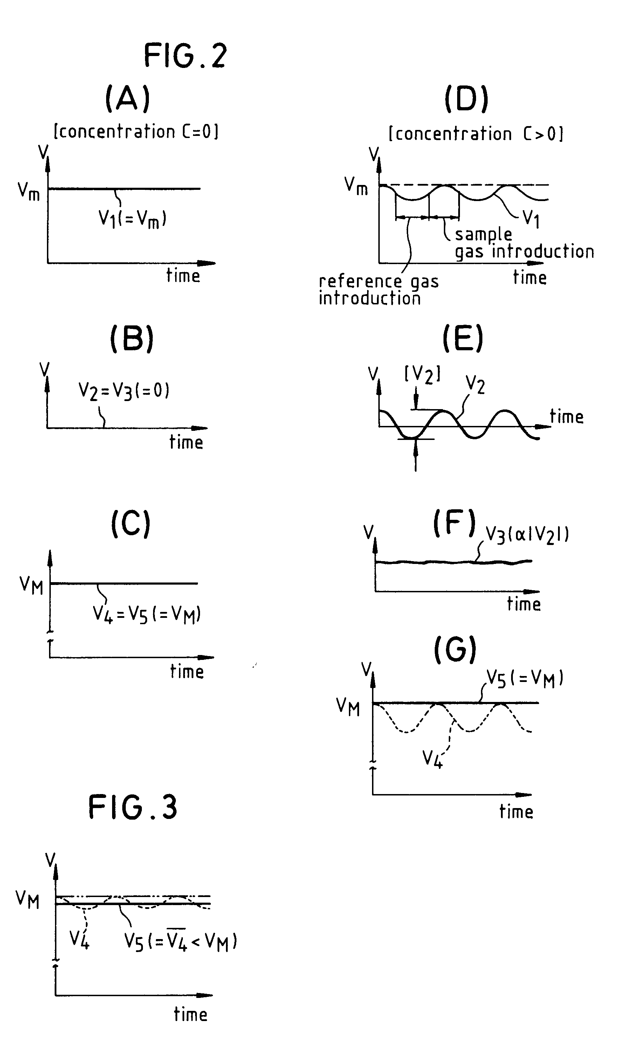

Now, in the gas analyzer constructed in the above described manner, provided that merely a zero gas, which is same as the reference gas, (concentration C = 0), in short the reference gas (zero gas), is continued to be introduced into the gas-passing through cell 2 instead of the sample gas, the signals $V_1$ to $V_5$ of each part of the circuit become as shown in Fig. 2(A), (B), (C). That is to say, the output signal $V_1$ of the preamplifier 5 is fixed at a maximum value $V_m$ (a signal comprising merely the direct current component having nothing to do with the gas concentration C), as shown in Fig. 2(A), because of the absence of the absorption in the gas-passing through cell 2. Consequently, the output signals $V_2$, $V_3$ ($=|V_2|$) of the alternating current amplifier circuit 6 and the rectifying circuit 7 are both fixed at 0, as shown in Fig. 2(B). In addition, the output signal $V_4$ of the direct current amplifier circuit 8 and the output signal $V_5$ of the peak hold circuit 9 are both fixed at a maximum value $V_M$ (a value corresponding to the maximum value $V_m$ of

said $V_1$ and a signal comprising merely the direct current component having nothing to do with the gas concentration similarly). Accordingly, the signal $V_0$ put out from the division circuit 10 to the indicator 11 becomes 0 in accordance with the concentration of the introduced gas C($=0$).

On the other hand, in the usual measurement, in the event that the reference gas (zero gas) and the sample gas ( concentration C > 0) are alternately introduced into the gas-passing through cell 2, the signals $V_1$ to $V_5$ are changed, as shown in Fig. 2(D) to (G). That is to say, the output signal $V_1$ becomes a signal in the form, on which a minus alternating current component having to do with the gas concentration C( > 0) is overlapped on the maximum value $V_m$ when said concentration C is 0, as shown in Fig. 2(D) since light is absorbed by the sample gas when it is introduced into the gas-passing through cell 2. Accordingly, the output signal $V_2$ from the alternating current amplifier circuit 6 becomes an alternating current signal, as shown in Fig. 2(E), and the output signal $V_3$ ( $= |V_2|$) from the rectifying circuit 7 becomes almost a direct current signal, as shown in Fig. 2(F), and the output signal $V_4$ from the direct current amplifier circuit 8 becomes a signal (the maximum value of $V_M$) which is obtained if the signal $V_1$ as shown in Fig. 2(D) is amplified as it is, and which is shown by a dotted line in Fig. 2(G), and the output signal $V_5$ from the peak hold circuit 9 is fixed at the maximum value $V_M$ similarly to the case of said concentration of C = 0, as shown by a full line in Fig. 2(G).

However, it goes without saying that the output signal $V_3$ from the rectifying circuit 7 proportional to the change $|V_2|$ of the output signal $V_2$ from said alternating current amplifier circuit 6 is substantially proportional to the absorption f(C) by the sample gas (concentration C > 0) but it is proportional to also the light-quantity I of the light source 1, the transmissivity T of the transmission window of the gas-passing through cell 2, the sensitivity K of the light-quantity detector 3 and the like (parameters having the possibility of changing with a lapse of time). Accordingly, provided that a gain of the alternating current amplifier circuit 6 is $G_A$, the output signal $V_3$ from the rectifying circuit 7 is expressed by the following equation ① :

$$ V_3 \propto |V_2| $$
$$ = G_A \cdot I \cdot T \cdot K \cdot f(C) \qquad \text{- - -} \quad ① $$

On the other hand, the output signal $V_5$ from said peak hold circuit 9 is fixed at the maximum value $V_M$ in the same manner as in the event that the zero gas (concentration C = 0) is introduced also even in the event that the sample gas (concentration C > 0) is introduced into the gas-passing through cell 2, so that it is obvious that the output signal $V_5$ has nothing to do with the absorption f(C) by the sample gas (concentration C > 0) but its maximum value $V_M$ is proportional to the light-quantity I of said light source 1, the transmissivity T of the transmission window of the gas-passing through cell 2, the sensitivity K of the light-quantity detector 3 and the like. Accordingly, provided that a gain of the direct current amplifier circuit 8 is $G_c$, the output signal $V_5$ from the peak hold circuit 9 is expressed by the following equation ② :

$$ V_5 = G_c \cdot I \cdot T \cdot K \qquad ② $$

Consequently, the signal $V_0$ put out as a result of the division $V_3/V_5$ carried out by said division circuit 10 is calculated by the following equation ③:

$$ V_0 = \frac{V_3}{V_5} = \frac{G_A \cdot I \cdot T \cdot K \cdot f(C)}{G_c \cdot I \cdot T \cdot K} = \frac{G_A}{G_c} \cdot f(C) \quad \cdots \quad ③ $$

using said equation ① and said equation ② , so that it is found that the signal $V_0$ is not influenced by the light-quantity I of the light source 1, the transmissivity T of the transmission window of the gas-passing through cell 2, the sensitivity of the light-quantity detector 3 and the like, and becomes a value proportional only to the absorption f(C) of the sample gas (concentration C > 0).

Accordingly, even though various kinds of change are produced with a lapse of time, that is to say the change of the light-quantity resulting from the changes of the voltage applied to the light source 1 and the ambient temperature, the deterioration of the light source 1 itself and the like, the change of the transmissivity T due to stains of the transmission window of the gas-passing through cell 2, the change of

4

the sensitivity K of the light-quantity detector 3 itself and the like occur, their influences (changes of span-drift) are not included in the output signal $V_0$ from the division circuit 10 to the indicator 11, whereby the indicator 11 always indicates a value corresponding to the concentration (C > 0) of the sample gas in high accuracy.

In addition, although in the above described first preferred embodiment the peak hold circuit 9 forming the signal $V_5$ corresponding to the maximum value $V_M$ of the output signal $V_4$ from the direct current amplifier circuit 8 is provided after the direct current amplifier circuit 8 so as to divide the output signal $V_3$ from the rectifying circuit 7 by the output signal $V_5$ (= $V_M$), in one modification, in which in particular the absorption f(C) by the sample gas (concentration C > 0) is small and the change of the output signal $V_4$ of the direct current amplifier circuit 8 is relatively small, a low-pass filter (not shown) can be used in place of said peak hold circuit 9. In this case, as shown in Fig. 3, the output signal $V_5$ from said low-pass filter becomes an almost mean value $\overline{V_4}$ (< $V_M$) of the output signal $V_4$ from the direct current amplifier circuit 8 but there is only a slight difference between the mean value $\overline{V_4}$ and said maximum value $V_M$, so that the operation and effect nearly equal to those in said first preferred embodiment can be attained.

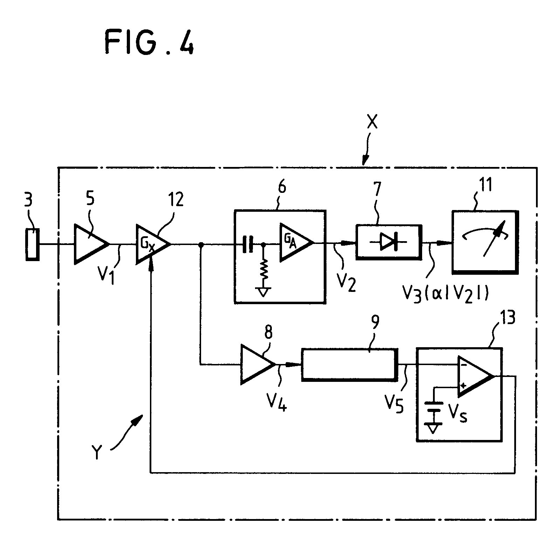

Fig. 4 shows a circuit construction of a signal-treatment circuit X in a second preferred embodiment.

That is to say, in this second preferred embodiment the division circuit 10 for directly dividing the output signal $V_3$ from the rectifying circuit 7 corresponding (porportional) to the change $|V_2|$ of the alternating current component $V_2$ put out from the alternating current amplifier circuit 6 by the output signal $V_5$ (= $V_M$) from the peak hold circuit 9 corresponding to the maximum value of the output signal $V_4$ from the direct current amplifier circuit 8 is not provided as in said first preferred embodiment but an auto-gain controller (hereinafter referred to as AGC) 12 is provided between the preamplifier 5 and the alternating current amplifier circuit 6 and the direct current amplifier circuit 8, and a comparator 13 having a reference voltage of $V_s$ is provided between said AGC 12 and the peak hold circuit 9, thereby constructing a compensating means Y for carrying out the feedback control for the AGC 12 so that the output signal $V_5$ from the peak hold circuit 9 may be always maintained at an appointed value $V_s$ and as a result, the operation (indirect division) equivalent to that in said first preferred embodiment may be carried out.

In short, in the signal-treatment circuit X of the above described construction, the output signal $V_3$ from the rectifying circuit 7 and the output signal $V_5$ from the peak hold circuit 9 are expressed by the following equations ④ , ⑤ , respectively.

$$V_3 \propto |V_2|$$
$$= G_K \cdot G_A \cdot I \cdot T \cdot K \cdot f(C) \qquad ---\quad ④$$
$$V_5 = G_K \cdot G_c \cdot I \cdot T \cdot K \qquad ---\quad ⑤$$

Since the gain $G_K$ of said AGC 12 is changed so that the following equation ⑥ may always hold good, the following equation ⑦ is derived from said equation 5 and said equation ⑥.

$$V_5 = V_s \qquad ---\quad ⑥$$

$$G_K = \frac{V_s}{G_c \cdot I \cdot T \cdot K} \qquad ---\quad ⑦$$

If the equation ⑦ is put in the equation ④, the following equation ⑧ is obtained.

$$V_3 \propto |V_2| = \frac{G_A}{G_c} \cdot V_s \cdot f(C) \qquad ---\quad ⑧$$

Accordingly, the signal $V_0$ put in the indicator 11 has nothing to do with the light-quantity I of the light source 1, the transmissivity T of the transmission window of the gas-passing through cell 2, the sensitivity K of the light-quantity detector 3 and the like and is proportional to merely the absorption f(C) by sample gas (concentration C>0) similarly as in said first preferred embodiment.

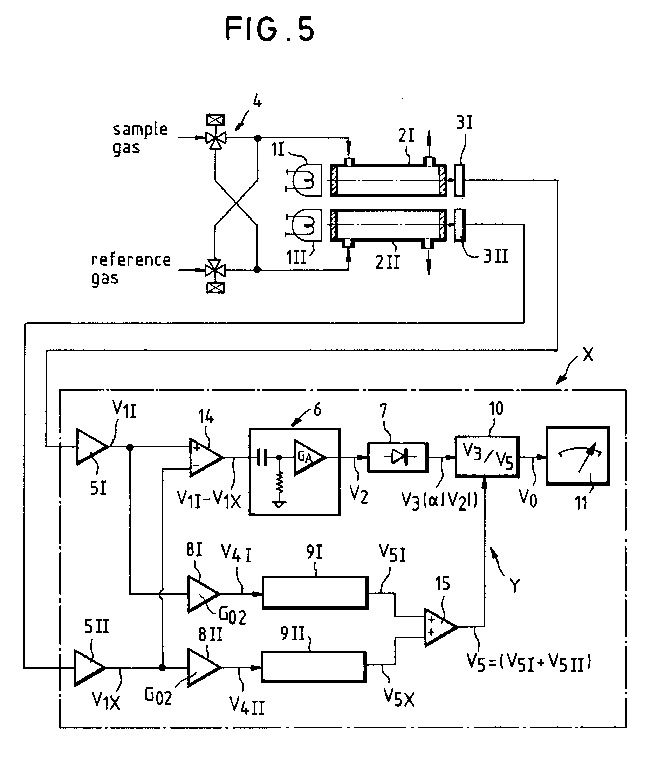

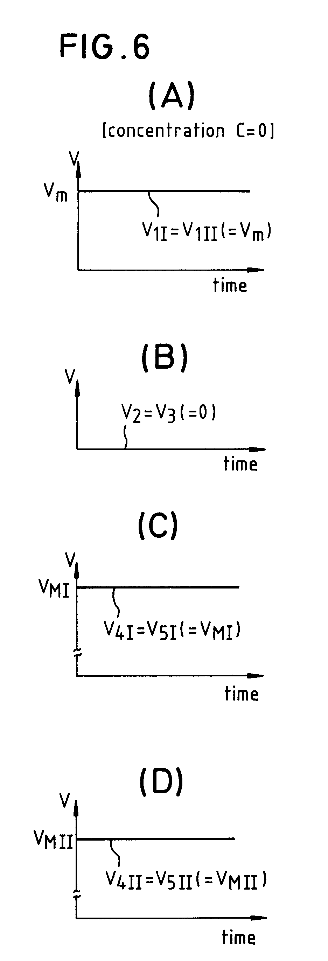

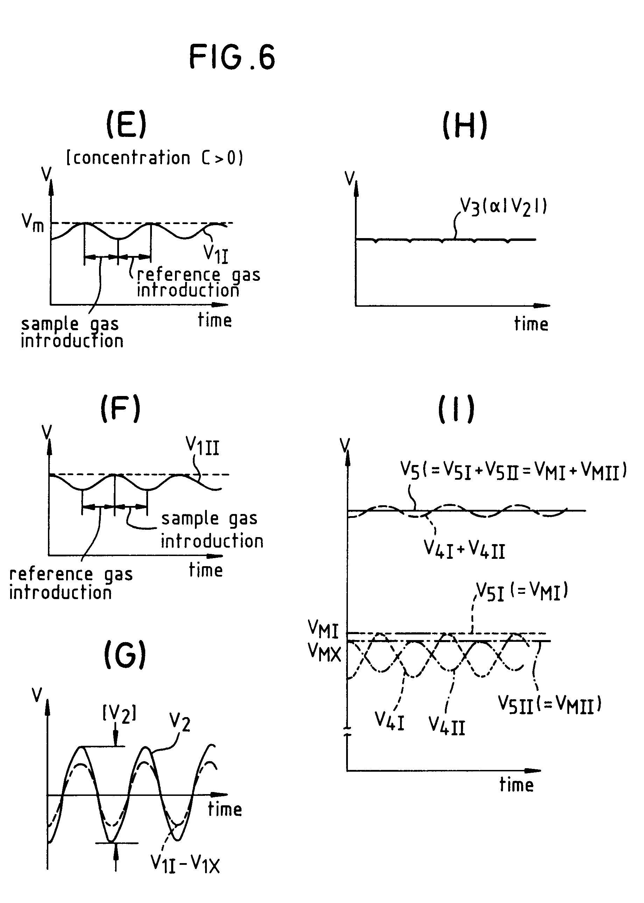

Figs. 5, 6 show a third preferred embodiment in which the present invention is applied to a double-cell type cross-flow gas analyzer. As shown in Fig. 5, a detector portion comprising a first measuring system comprising a first light source 1I, a first gas-passing through cell 2I and a first light-quantity detector (for example thermopile) 3I for detecting an absolute value of a quantity (energy) of a light passing through said first gas-passing through cell 2I arranged in this order so that an optical linear relation is established , a second measuring system comprising a second light source 1II, a second gas-passing through cell 2II and a second light-quantity detector 3II for detecting an absolute value of an energy of a light passing through said second gas-passing through cell 2II arranged in this order so that an optical linear relation is established, and a gas distributor 4 for alternately supplying said both gas-passing through cells 2I, 2II in said both measuring systems with a sample gas and a reference gas (usually a zero gas) is provided and the signal-treatment circuit X capable of obtaining a measured signal having a magnitude about two times that obtained in a single-cell type gas analyzer according to said first preferred embodiment by taking a difference between an output signal by the light-quantity detector 3I and the light-quantity detector 3II in said both measuring systems has the following construction.

Said signal-treatment circuit X comprises a first preamplifier 5I for amplifying a detected signal from said first light-quantity detector 3I, a second preamplifier 5II for amplifying a detected signal from said second light-quantity detector 3II, a subtraction circuit 14 for taking a difference between an output signal $V_{1I}$ from the first amplifier 5I and an output signal $V_{1II}$ from the second amplifier 5II, an alternating current amplifier circuit 6 for taking out an alternating current component $V_2$ corresponding to a difference between an optical energy after passing through the reference gas (zero gas) and that after passing through the sample gas from the output signals ($V_{1I}$ -$V_{1II}$) of the subtraction circuit 14, a rectifying circuit 7 for taking out a signal $V_3$ corresponding (proportional) to a change $|V_2|$ of the alternating current component $V_2$, a first direct current amplifier circuit 8I for direct-current amplifying the output signal $V_{1I}$ from said first preamplifier 5I and a first peak hold circuit 9I for putting out a signal $V_{5I}$ corresponding to a maximum value of an output signal $V_{4I}$ from said first direct current amplifier circuit 8I as well as a second direct current amplifier circuit 8II for direct-current amplifying an output signal $V_{1II}$ from said second preamplifier 5II and a second peak hold circuit 9II for putting out a signal $V_{5II}$ corresponding to a maximum value of an output signal $V_{4II}$ from said second direct current amplifier circuit 8II arranged in parallel to said alternating current amplifier circuit 6 and said rectifying circuit 7, respectively, an addition circuit 15 for taking the sum of the output signal $V_{5I}$ from the peak hold circuit 9I and the output signal $V_{5II}$ from the peak hold circuit 9II, and a division circuit 10 for dividing the signal $V_3$ corresponding (proportional) to the change $V_2|$ of the alternating current component $V_2$ put out from said rectifying circuit 7 by the signal $V_5$ (= $V_{5I}$ + $V_{5II}$: the direct current component having nothing to do with the concentration of said sample gas) put out from said addition circuit 15 so as to put out an output signal $V_0$ from said division circuit 10 to an indicator 11 to take out a direct current component $V_5$ having nothing to do with the concentration of said sample gas in addition to said alternating current component $V_2$. Here, said first direct current amplifier circuit 8I, second direct current amplifier circuit 8II, first peak hold circuit 9I, second peak hold circuit 9II, addition circuit 15 and division circuit 10 are collectively called a compensating means Y.

Now, in a gas analyzer constructed in the above described manner, provided that only the reference gas (zero gas) is continuously introduced into said both gas-passing through cells 2I, 2II, the signal of each portion of the circuit is shown in Fig. 6(A) to (D). That is to say, said both output signals $V_{1I}$, $V_{1II}$ from said both preamplifiers 5I, 5II are fixed (a gain is adjusted in such a manner) at a maximum value $V_m$ (a signal comprising merely the direct current component having nothing to do with the gas concentration C), as shown in Fig. 6(A), since there is no light-absorption within the gas-passing through cells 2I, 2II. Consequently, both the output signals $V_2$, $V_3$ (= $|V_2|$) from the alternating current amplifier circuit 6 and the rectifying circuit 7 are fixed at 0, as shown in Fig. 6(B). In addition, the output signals $V_{4I}$, $V_{5I}$ from the first direct current amplifier circuit 8I and the first peak hold circuit 9I are both fixed at a maximum value $V_{M1}$ (a value corresponding to the maximum value $V_m$ of said $V_{1I}$ and a signal comprising merely the direct current component having nothing to do with the gas concentration C likewise) and the output signal $V_{4II}$, $V_{5II}$ from the second direct current amplifier circuit 8II and the second peak hold circuit 9II are both fixed at a maximum value $V_{MII}$ (a value corresponding to the maximum value $V_m$ of said $V_{1II}$ and a signal comprising merely the direct current component having nothing to do with the gas concentration C likewise), as shown in Fig. 6(C) and Fig. 6(D), respectively. Accordingly, the signal $V_0$ put out from the division circuit 10 to the indicator 11 becomes 0 in correspondence to the concentration C (= 0) of the gas introduced.

6

On the other hand, in the usual measurement, in the event that the reference gas (zero gas) and the sample gas (concentration C > 0) are alternately and complementarily introduced into said both gas-passing through cells 2I, 2II at an appointed cycle, the signal at each portion in the circuit is changed in a manner as shown in Fig. 6(E) to (I). That is to say, the output signal $V_{1I}$ from the first preamplifier 5I becomes a signal having a shape of overlapping a minus alternating current component related to the gas concentration C ( > 0) on the maximum value $V_m$ in the case of said concentration C = 0, as shown in Fig. 6(E), because when the sample gas is introduced into the gas-passing through cells 2I, 2II, the light-absorption by the sample gas occurs. On the other hand, the output signal $V_{1II}$ from the second preamplifier 5II becomes an alternating current signal having a phase different a half cycle from that of the output signal $V_{1I}$ from said first preamplifier 5I, as shown in Fig. 6(F). Consequently, an output signal $V_{1I} - V_{1II}$ from the subtraction circuit 14 becomes an alternating current signal as shown by a dotted line in Fig. 6(G). In addition, the output signal $V_2$ from the alternating current amplifier circuit 6 becomes an alternating current signal as shown by a full line in Fig. 6(G) and the output signal $V_3$ ($= |V_2|$) from the rectifying circuit 7 becomes a signal of almost direct current, as shown in Fig. 6(H).

And, the output signals $V_{4I}$, $V_{4II}$ from both direct current amplifier circuits 8I, 8II have shapes, which are obtained by amplifying the signals $V_{1I}$, $V_{1II}$ shown in said Fig. 6(E) and Fig. 6(F) as they are, respectively, as shown by a dotted curve and a one-dotted chain curve in Fig. 6(I), (maximum values $V_{MI}$, $V_{MII}$). In addition, the output signals $V_{5I}$, $V_{5II}$ from both peak hold circuits 9I, 9II are fixed at the same maximum values $V_{MI}$, $V_{MII}$ as in said case of the concentration C = 0, respectively, as shown by a dotted straight line and a one-dotted chain straight line in Fig. 6(I). Accordingly, the output signal $V_5$ ($= V_{5I} + V_{5II} = V_{MI} + V_{MII}$) from the addition circuit 15 as shown by a full straight line in Fig. 6(I) becomes a mean value of $V_{4I} + V_{4II}$ (a difference between the output signal from the direct current amplifier circuit 8I and the output signal from the direct current amplifier circuit 8II) shown by a two-dotted chain curve in Fig. 6(I).

Now, as easily inferred on the analogy of the description in said first preferred embodiment, it is obvious that the output signal $V_3$ from the rectifying circuit 7 proportional to the change $|V_2|$ of the output signal $V_2$ from said alternating current amplifier circuit 6 is proportional to the absorption f(C) by the sample gas (concentration C > 0), the light-quantity of the light sources 1I, 1II, the transmissivity of the transmission window of the gas-passing through cells 2I, 2II, the sensitivity of the light-quantity detectors 3I, 3II and the like, and the output signal $V_5$ from said addition circuit 15 has nothing to do with the absorption f(C) by the sample gas and is proportional to the light-quantity of said light sources 1I, 1II, the transmissivity of the transmission window of the gas-passing through cells 2I, 2II, the sensitivity of the light-quantity detectors 3I, 3II and the like, so that the signal $V_0$ put out as a result of the division $V_3/V_5$ carried out by the division circuit 10 is independent of the light-quantity of the light sources 1I, 1II, the transmissivity of the transmission window of the gas-passing through cell 2I, 2II, the sensitivity of the light-quantity detectors 3I, 3II and the like and is proportional to merely the absorption f(C) by the sample gas (concentration C > 0), whereby the indicator 11 indicates always a value corresponding to the concentration (C > 0) of the sample gas in high accuracy.

As obvious from the above description, with a gas analyzer according to the present invention, a light-quantity detector of a type of detecting an absolute value of an optical energy passing through a gas-passing through cell is adopted as a detector to be provided in a downstream side of said gas-passing through cell into which a sample gas and a reference gas are alternately introduced at an appointed cycle, and also compensating means for detecting a direct current component from the output signal from said light-quantity detector separately from said alternating current component and dividing said change of the alternating current component by said direct current component or compensating means equivalent to said compensating means is provided so that the influences of said light-quantity of the light source, the transmissivity of the transmission window of the gas-passing through cell, the sensitivity of the light-quantity detector and the like upon the alternating current component can be compensated and eliminated by merely a simple means comprising merely an internal signal treatment, and thus, superior effects can be exhibited in that all of span-drifts resulting from various kinds of factor, such as the change of light-quantity due to changes of a voltage applied to the light source and an ambient temperature, the deterioration of the light source itself and the like, stains of the transmission window of the gas-passing through cell and a change of the sensitivity of the detector itself, can be always compensated surely and in high accuracy in spite of a remarkably simple, compact and inexpensive construction without requiring the provision of the conventional large-scaled means for stabilizing the voltage applied to the light source and maintaining the ambient temperature always constant or other specified detectors for use in compensation and without requiring a so frequent repetition of expensive and troublesome calibration operations using a standard span gas as in the conventional gas analyzer.

**Claims**

1. A gas analyzer comprising:
   - a light source means (1; 1I, 1II);
   - a gas-passing through cell means (2; 2I, 2II) irradiated by the light source means;
   - a light quantity detector means (3; 3I, 3II) for detecting the quantity of light passing through said gas-passing through cell means, and outputting detector signals;
   - a gas distributor means (4) for alternatingly introducing a sample gas and a reference gas into said gas-passing through cell means; and
   - a signal processing circuit (X) receiving said detector signals and outputting a measurement signal indicating the amount of a gas component to be detected within said sample gas, said circuit comprising an alternating current detecting means (6) for outputting only the alternating current signal component of said detector signals, and a rectifier means (7) for receiving the output signal of said alternating current detecting means;
   **characterized in that** said signal processing circuit (X) further comprises:
   - a peak detecting means (8, 9; 8I, 8II, 9I, 9II) for outputting a peak value signal representing essentially the peak value of the detector signals; and
   - a dividing means (10) for dividing said rectified signal by said peak value signal, and for outputting the result of this division as said measurement signal.

2. A gas analyzer comprising:
   - a light source means (1; 1I, 1II);
   - a gas-passing through cell means (2; 2I, 2II) irradiated by the light source means;
   - a light quantity detector means (3; 3I, 3II) for detecting the quantity of light passing through said gas-passing through cell means, and outputting detector signals;
   - a gas distributor means (4) for alternatingly introducing a sample gas and a reference gas into said gas-passing through cell means; and
   - a signal processing circuit (X) receiving said detector signals and outputting a measurement signal indicating the amount of a gas component to be detected within said sample gas, said circuit comprising an alternating current detecting means (6) for outputting only the alternating current signal component of said detector signals, and a rectifier means (7) for receiving the output signal of said alternating current detecting means;
   **characterized in that** said signal processing circuit (X) further comprises:
   - a peak detecting means (8, 9; 8I, 8II, 9I, 9II) for outputting a peak value signal representing essentially the peak value of the detector signals; and
   - an auto-gain controller (12) for amplifying said detector signals, whereby the gain is adjusted according to said peak value signal, to keep said peak value signal constant.

3. A gas analyzer according to one of the claims 1 or 2, **characterized in that** said peak detecting means (8, 9; 8I, 8II, 9I, 9II) comprises a peak hold circuit (9, 9I, 9II).

4. A gas analyzer according to one of the claims 1 or 2, **characterized in that** said peak detecting means comprises a low pass filter.

5. A gas analyzer according to claim 1, **characterized in that** it comprises pairs of light source means (1I, 1II), gas-passing through cell means (2I, 2II) and light quantity detector means (3I, 3II), and that said signal processing circuit (X) is arranged to establish the difference of the signals from the two light quantity detector means (3I, 3II) as the detector signals input into said alternating current detecting means, and to establish the sum of the peak value signals related respectively to the two light quantity detector means, for dividing said rectified signal by said sum.

**Patentansprüche**

1. Gasanalysiervorrichtung mit:
   - einer Lichtquelle (1; 1I, 1II);
   - einer Durchlaufzelle (2; 2I, 2II) für Gas, die durch die Lichtquelle beleuchtet wird;
   - einem Lichtmengendetektor (3; 3I, 3II), der die durch die Gasdurchlaufzelle durchlaufende Lichtmenge mißt und entsprechende Detektorsignale ausgibt;

- einem Gasverteiler (4) zum abwechselnden Einleiten eines Probengases und eines Bezugsgases in die Gasdurchlaufzelle; und mit
- einer Signalverarbeitungsschaltung (X), welche die Detektorsignale empfängt und die Wechselstromsignalkomponente dieser Detektorsignale als Meßsignal ausgibt, das die Menge einer im Probengas zu erfassenden Gaskomponente anzeigt, und einen Gleichrichter zum Gleichrichten des von einer Wechselstromerfassungseinrichtung (6) gelieferten Ausgangssignals aufweist; **dadurch gekennzeichnet,** daß die Signalverarbeitungsschaltung (X) weiterhin folgendes aufweist:
- einen Spitzenwertdetektor (8, 9; 8I, 8II, 9I, 9II) zum Ausgeben eines Spitzenwertsignals, das im wesentlichen dem Spitzenwert der Detektorsignale entspricht; und
- einen Dividierer (10) zum Teilen des gleichgerichteten Signals durch das Spitzenwertsignal und zum Ausgeben des Ergebnisses dieser Division als Meßsignal.

2. Gasanalysiervorrichtung mit:
- einer Lichtquelle (1; 1I, 1II);
- einer Durchlaufzelle (2; 2I, 2II) für Gas, die durch die Lichtquelle beleuchtet wird;
- einem Lichtmengendetektor (3; 3I, 3II), der die durch die Gasdurchlaufzelle durchlaufende Lichtmenge mißt und entsprechende Detektorsignale ausgibt;
- einem Gasverteiler (4) zum abwechselnden Einleiten eines Probengases und eines Bezugsgases in die Gasdurchlaufzelle; und mit
- einer Signalverarbeitungsschaltung (X), welche die Detektorsignale empfängt und die Wechselstromsignalkomponente dieser Detektorsignale als Meßsignal ausgibt, das die Menge einer im Probengas zu erfassenden Gaskomponente anzeigt, und einen Gleichrichter zum Gleichrichten des von einer Wechselstromerfassungseinrichtung (6) gelieferten Ausgangssignals aufweist; **dadurch gekennzeichnet,** daß die Signalverarbeitungsschaltung (X) weiterhin folgendes aufweist:
- einen Spitzenwertdetektor (8, 9; 8I, 8II, 9I, 9II) zum Ausgeben eines Spitzenwertsignals, das im wesentlichen dem Spitzenwert der Detektorsignale entspricht; und
- einen automatischen Verstärkungsregler (12), über den die verstärkten Detektorsignale, abhängig vom Spitzenwertsignal, auf konstante Werte geregelt werden.

3. Gasanalysiervorrichtung nach einem der Ansprüche 1 oder 2, **dadurch gekennzeichnet,** daß der Spitzenwertdetektor (8, 9; 8I, 8II, 9I, 9II) eine Spitzenwerthalteschaltung (9, 9I, 9II) aufweist.

4. Gasanalysiervorrichtung nach einem der Ansprüche 1 oder 2, **dadurch gekennzeichnet,** daß der Spitzenwertdetektor ein Tiefpaßfilter aufweist.

5. Gasanalysiervorrichtung nach Anspruch 1, **dadurch gekennzeichnet,** daß sie Paare von Lichtquellen (1I, 1II), Gasdurchlaufzellen (2I, 2II) und Lichtmengendetektoren (3I, 3II) aufweist, und daß die Signalverarbeitungsschaltung (X) so ausgebildet ist, daß sie die Differenz der Signale der zwei Lichtmengendetektoren (3I, 3II) als die in die Wechselstromerfassungseinrichtung einzugebenden Detektorsignale bildet, und die Summe der Spitzenwertsignale bildet, die sich jeweils auf die zwei Lichtmengendetektoren beziehen, um das gleichgerichtete Signal durch diese Summe zu teilen.

**Revendications**

1. Analyseur de gaz, comprenant :
- une source de lumière (1; 1I, 1II) ;
- une cellule de passage de gaz (2; 2I, 2II), illuminée par la source de lumière ;
- un détecteur de quantité de lumière (3; 3I, 3II), pour détecter la quantité de lumière traversant la cellule de passage de gaz et délivrer des signaux de détection ;
- un distributeur de gaz (4), pour introduire alternativement un gaz d'échantillonnage et un gaz de référence dans la cellule de passage de gaz ; et
- un circuit de traitement de signaux (X), recevant les signaux de détection et délivrant un signal de mesure indiquant la quantité d'un composant gazeux à détecter dans le gaz d'échantillonnage, ce circuit comprenant un détecteur de courant alternatif (6) pour délivrer uniquement la composante de signal de courant alternatif des signaux de détection, et un redresseur (7) recevant le signal de sortie du détecteur de courant alternatif ;

**caractérisé** en ce que le circuit de traitement de signaux (X) comprend en outre :
- un détecteur de valeur de crête (8, 9; 8I, 8II, 9I, 9II), pour délivrer un signal de valeur de crête représentant essentiellement la valeur de crête des signaux de détection ; et
- un diviseur (10), pour diviser le signal redressé par le signal de valeur de crête, et pour délivrer le résultat de cette division comme signal de mesure.

**2.** Analyseur de gaz, comprenant :
- une source de lumière (1; 1I, 1II) ;
- une cellule de passage de gaz (2; 2I, 2II), illuminée par la source de lumière ;
- un détecteur de quantité de lumière (3; 3I, 3II), pour détecter la quantité de lumière traversant la cellule de passage de gaz et délivrer des signaux de détection ;
- un distributeur de gaz (4), pour introduire alternativement un gaz d'échantillonnage et un gaz de référence dans la cellule de passage de gaz ; et
- un circuit de traitement de signaux (X), recevant les signaux de détection et délivrant un signal de mesure indiquant la quantité d'un composant gazeux à détecter dans le gaz d'échantillonnage, ce circuit comprenant un détecteur de courant alternatif (6) pour délivrer uniquement la composante de signal de courant alternatif des signaux de détection, et un redresseur (7) recevant le signal de sortie du détecteur de courant alternatif ;
  **caractérisé** en ce que le circuit de traitement de signaux (X) comprend en outre :
- un détecteur de valeur de crête (8, 9; 8I, 8II, 9I, 9II), pour délivrer un signal de valeur de crête représentant essentiellement la valeur de crête des signaux de détection ; et
- un dispositif à réglage automatique d'amplification (12) pour amplifier les signaux de détection, l'amplification étant réglée conformément au signal de valeur de crête afin de maintenir ce signal constant.

**3.** Analyseur de gaz selon la revendication 1 ou 2, **caractérisé** en ce que le détecteur de valeur de crête (8, 9; 8I, 8II, 9I, 9II) comprend un circuit de maintien de valeur de crête (9, 9I, 9II).

**4.** Analyseur de gaz selon la revendication 1 ou 2, **caractérisé** en ce que le détecteur de valeur de crête comprend un filtre passe-bas.

**5.** Analyseur de gaz selon la revendication 1, **caractérisé** en ce qu'il comprend une paire de sources lumineuses (1I, 1II), de cellules de passage de gaz (2I, 2II) et de détecteurs de quantité de lumière (3I, 3II), et en ce que le circuit de traitement de signaux (X) est conçu pour déterminer les différences des signaux provenant des deux détecteurs de quantité de lumière (3I, 3II), comme signaux de détection introduits dans le détecteur de courant alternatif, et pour déterminer la somme des signaux de valeur de crête respectivement associés aux deux détecteurs de quantité de lumière, afin de diviser le signal redressé par cette somme.

# FIG.1

# FIG.7 PRIOR ART

# FIG.2

## (A)

[concentration C=0]

$V_1(=V_m)$

## (D)

[concentration C>0]

$V_1$

sample gas introduction

reference gas introduction

## (B)

$V_2=V_3(=0)$

## (E)

$[V_2]$   $V_2$

## (C)

$V_4=V_5(=V_M)$

## (F)

$V_3(\alpha|V_2|)$

## (G)

$V_5(=V_M)$

$V_4$

# FIG.3

$V_4$   $V_5(=\overline{V_4}<V_M)$

# FIG . 4

# FIG.5

# FIG.6

## (A)

[concentration C=0]

$V_{1I}=V_{1II}(=V_m)$

## (B)

$V_2=V_3(=0)$

## (C)

$V_{4I}=V_{5I}(=V_{MI})$

## (D)

$V_{4II}=V_{5II}(=V_{MII})$

# FIG.6

**(E)**

[concentration C > 0]

$V_m$ — — $V_{1I}$

reference gas introduction

sample gas introduction

time

**(F)**

$V_{1II}$

sample gas introduction

reference gas introduction

time

**(G)**

$[V_2]$  $V_2$

time

$V_{1I} - V_{1X}$

**(H)**

$V_3(\alpha|V_2|)$

time

**(I)**

$V_5(= V_{5I} + V_{5II} = V_{MI} + V_{MII})$

$V_{4I} + V_{4II}$

$V_{5I} (= V_{MI})$

$V_{MI}$
$V_{MX}$

$V_{5II} (= V_{MII})$

$V_{4I}$  $V_{4II}$

time